# EUROPEAN PATENT APPLICATION

(11) **EP 1 568 751 A1**
(43) Date of publication of application: **31.08.2005**
(21) Application number: 04100678.4
(22) Date of filing: 20.02.2004
(51) Int. Cl.: C09K 11/08, C09K 11/85, G21K 4/00

(54) **Method of preparing storage phosphors from dedicated precursors**

(71) Applicant: AGFA-GEVAERT, 2640 Mortsel (BE)
(72) Inventor: Tahon, Pierre Corporate IP Department 3800, 2640, Mortsel (BE); Leblans, Paul Corporate IP Department 3800, 2640, Mortsel (BE); Lamotte, Johan Corporate IP Department 3800, 2640, Mortsel (BE)

(57) **Abstract**

A method for producing CsX:Eu stimulable phosphors and screens or panels provided with said phosphors as powder phosphors or vapour deposited needle-shaped phosphors suitable for use in image forming methods for recording and reproducing images of objects made by high energy radiation, wherein said CsX:Eu stimulable phosphors are essentially free from oxygen in their crystal structure, and wherein X represents a halide selected from the group consisting of Br, Cl and combinations thereof, and wherein the method further makes use of starting compounds or combinations of starting compounds having as a composition CsₓEu_{y}X'_{x+αy}, wherein the ratio of x to y exceeds a value of 0.25, wherein α > 2 and wherein X' is a halide selected from the group consisting of Cl, Br and I and combinations thereof; heating said mixture at a temperature above 450 °C; cooling said mixture, and optionally annealing and recovering said CsX:Eu phosphor.

## Description

### FIELD OF THE INVENTION

The present invention relates to a solution for the synthesis or preparation of CsBr:Eu phosphors, free from impurities, more particularly free from oxygen, and to the preparation of screens or panels making use of said phosphors, as well as to methods of image formation with said screens or panels.

### BACKGROUND OF THE INVENTION

A well known use of storage phosphors is in the production of X-ray images. In US-A-3 859 527 a method for producing X-ray images with a photostimulable phosphor, which are incorporated in a panel is disclosed. The panel is exposed to an incident pattern-wise modulated X-ray beam and as a result thereof the phosphor temporarily stores energy contained in the X-ray radiation pattern. At some interval after the exposure, a beam of visible or infra-red light scans the panel in order to stimulate the release of stored energy as light that is detected and converted to sequential electrical signals which are processed to produce a visible image. For this purpose, the phosphor should store as much as possible of the incident X-ray energy and emit as little as possible of the stored energy until stimulated by the scanning beam. This is called "digital radiography" or "computed radiography".

The image quality that is produced by any radiographic system using a phosphor screen, thus also by a digital radiographic system, largely depends on the construction of the phosphor screen. Generally, the thinner a phosphor screen at a given amount of absorption of X-rays, the better the image quality will be.

This means that the lower the ratio of binder to phosphor of a phosphor screen, the better the image quality, attainable with that screen, will be. Optimum sharpness can thus be obtained when screens without any binder are used. Such screens can be produced, e.g., by physical vapour deposition, which may be thermal vapour deposition, sputtering, electron beam deposition or other of phosphor material on a substrate. However, this production method can not be used to produce high quality screens with every arbitrary phosphor available. The mentioned production method leads to the best results when a phosphor is used the crystals of which melt congruently.

The use of alkali metal halide phosphors in storage screens or panels is well known in the art of storage phosphor radiology and congruent melting of these phosphors makes it possible to manufacture structured screens and binderless screens.

It has been disclosed that when binderless screens with an alkali halide phosphors are produced it is beneficial to have the phosphor crystal deposited as some kind of piles, needles, tiles, or other related forms. So in US-A-4 769 549 it is disclosed that the image quality of a binderless phosphor screen can be improved when the phosphor layer has a block structure, shaped in fine pillars.

In US-A-5 055 681 a storage phosphor screen comprising an alkali halide phosphor in a pile-like structure is disclosed. The image quality of such screens still needs to be increased and in JP-A-06/230 198 it is disclosed that the surface of the screen with pillar like phosphors is rough and that a levelling of that surface can increase the sharpness. In US-A-5 874 744 the attention is drawn to the index of refraction of the phosphor used in order to produce the storage phosphor screen with a needle-like or pillar-like phosphor.

In EP-A-1 113 458 a binderless storage phosphor screen is disclosed that comprises an alkali metal storage phosphor characterised in that said screen shows an XRD-spectrum with a (100) diffraction line having an intensity I₁₀₀ and a (110) diffraction line having an intensity I₁₁₀, so that I₁₀₀/I₁₁₀ ≥ 1. Such a phosphor screen shows a better compromise between speed and sharpness.

Upon excitation with high energy radiation, excitons or electron/hole pairs are created in prompt emitting phosphors and scintillators. In the subsequent recombination of an electron and a hole, energy is released which is used for the creation of a luminescent photon, i.e. for the luminescence process. The presence of defects in the phosphor material gives rise to additional energy levels in the band gap. As a consequence, electrons can de-excite in many small steps. The resulting energy packets are too small to give rise to photon emission. Instead thereof the energy is transformed in so-called phonons or lattice vibrations. I.e. the excitation energy is lost in the form of heat.

In a similar way as in prompt emitting phosphors, high energy radiation creates electron/hole pairs in storage phosphors. In these materials, many electron/hole pairs do not recombine directly. Instead thereof the electrons are trapped in electron traps and the holes are trapped in hole traps. Upon subsequent stimulation of the storage phosphor with light in the longer wavelength range as e.g. red light, the trapped electrons can absorb a photon. The photon supplies sufficient energy in order to escape from the trap. Such an escape is followed by recombination with a hole and by stimulated luminescence.

The traps in a storage phosphor are often intrinsic lattice defects. E.g. in alkaline earth halide and alkali halide storage phosphors, the electrons are trapped in halide vacancies, which are thus transformed into F-centres. If the storage phosphor crystal lattice is contaminated with foreign elements, additional defects are created. These defects can poison the luminescence as in a prompt emitting phosphor. In addition, these defects can compete with the intrinsic lattice defects as electron trapping centres. The additional defects are generally too unstable to be useful for long-term energy storage or too stable, so that the electrons are not released upon stimulation.

So, for prompt emitting phosphors and even more so for storage phosphors, it is of the utmost importance to avoid contamination with foreign elements.

Moreover high moisture content in the raw mix may cause troubles as bumping of the evaporation source which may occur as unacceptable inhomogeneities of the screens afterwards, while evaluating the quality thereof.

Many contaminations can be avoided by using very pure substances in the phosphor synthesis process. Other contaminations are more difficult to prevent.

Alkali halide and alkaline earth halide phosphors are often contaminated with oxides. The origin of this contaminating element may be water, adsorbed at the surface of the often slightly hygroscopic salt particles, more particularly at the surface of the Eu-compound derivatives. In the synthesis of the CsBr:Eu storage phosphor according to the state-of-the art methods the dopant material is the source of oxygen contamination.

In EP-A 1 276 117, synthesis of CsBr:Eu starting from CsBr and a Europium compound selected from the group consisting of Eu(II)halides, Eu(III) halides and Eu-oxyhalides has been described as an improvement over using Eu₂O₃ as dopant material. It is clear that use of the above mentioned dopant compounds reduces the amount of the oxygen in the reaction mixture.

Yet, even use of europium halide EuXₙ (2≤n≤3) or europium oxyhalide (EuOX) may entail oxygen contamination. In the case wherein EuOX (X representing a halide) is used it is clear that oxide contamination will take place to a certain extent. As EuOX decomposes at a temperature of 700°C or more (which represents a temperature, exceeding the melting temperature of CsBr:Eu with at least 100°C) it is clear that the vaporisation process lacks for a "one phase" process from its initial step and that, when all of the starting materials are mixed in only one crucible, a phase separation occurs, further provoking instability in the vapour deposition process, the more as this phenomenon also causes bumping during said evaporation process and inhomogeneous deposit onto the phosphor support. A solution could be sought by strict separation of the raw stock materials in several (at least two) crucibles followed by vaporisation of raw materials or precursors from 2 crucibles or boats for the preparation of the dedicated phosphor, in such a manner that the resulting phosphor satisfies the stoichiometric requirements. Such a solution however requires strict geometrical arrangements within the vapour deposition chamber, and this may lay burden on the reproducibility of the process as the evaporation of the Cs-compounds and Eu-compounds proceeds after melting at differing temperatures.

Furtheron, even if a EuXₙ (2≤n≤3) material, without "structural" presence of oxygen at first sight, is used, oxygen contamination will however take place unless very strict precautions are taken.

EuXₙ (2≤n≤3) compounds are known to be very hygroscopic. EuBr₃ for instance is commercially available only as EuBr₃.6-9H₂O. When this material is heated, hydrolysis will take place and EuOBr is formed.

In order to avoid hydrolysis, dehydration must be complete, because presence of 1 molecule of water per molecule of EuBr₃ is sufficient for complete transformation into EuOBr and HBr. Similar problems exist with other europium halides.

Hydrolysis and subsequent transformation into europium oxyhalide can be avoided if europium halide is heated to a temperature not higher than 200°C under reduced pressure for a long time. For significant quantities, however, this process may take days or may even be impossible to complete.

The resulting dehydrated europium halide will take up water, however, as soon as it is exposed to ambient atmosphere. This means that mixing with the CsBr matrix material must take place in a glove box or in a room with a conditioned, completely dry atmosphere. Also during transfer of the material to the reaction environment as e.g. a furnace to make powder CsBr:Eu or a vacuum chamber to make a CsBr:Eu phosphor layer by vapour deposition, precautions should be taken in order to avoid water take up.

Alternatively, the water containing raw mix, consisting of CsBr and dehydrated EuXₙ (2≤n≤3) can be dried in the reaction environment, i.e. in the furnace for production of CsBr:Eu powder or in the vacuum chamber for the production of CsBr:Eu layers by vacuum deposition.

However, drying a raw mix in a furnace is very time-consuming or even impossible, because the water must diffuse through a thick powder layer. Even for a limited thickness of the powder layer, the drying process may require several days, making the phosphor synthesis process very time consuming and inefficient.

When the raw mix is dried in the vacuum chamber in which vapour deposition should take place, a large amount of water vapour will be set free. This will disturb the vacuum and cause corrosion. Water will be readily adsorbed at the vacuum chamber walls and removal of the adsorbed water will again remain very time consuming.

In order to provide a method for manufacturing an europium halide molten and solidified body of high purity useful as a raw material for vapour deposition in particular, a method has been described in JP-A 2003-201119, wherein in the method for manufacturing the europium halide molten and solidified body, europium halide is molten by heating and then is cooled in the presence of a halogen source as e.g. ammonium halide, or a halogen as such, preferably under an atmosphere of dried air. In the presence of such compounds however corrosion may occur of environmental materials. Dryness processing during a heating time from 1 to 10 hours at temperatures up to 400°C under vacuum moreover takes quite a lot of time.

As described in the Journal of Less-Common Materials, Vol. 127 (1987), p.155-160, the "ammonium bromide route to anhydrous rare earth bromides", in a first step Eu₂O₃, after having been treated with ammonium bromide following a "dry route ", delivers as complex europium bromide salts (NH₄)₂EuBr₅ and (NH₄)₃EuBr₆, wherein, in a competing reaction EuOBr is formed. As an alternative therefor, in a wet preparation step, heating of a mixture of NH₄Br and Eu₂O₃ in concentrated HBr is performed. Hydrated EuBr₃.6aq may be used but NH₄Br in an excessive amount is required in order to avoid hydrolysis and formation of EuOBr.

(NH₄)₂EuBr₅ and (NH₄)₃EuBr₆ should be stored under "dry atmospheric conditions" in order to avoid hydrolysis or hydrate formation, leading to oxybromide contamination during subsequent decomposition to tribromides. Decomposition of those ternary complex salts at temperatures in the range from 350-400°C in vacuum however leads, in a final decomposition step to the desired binary EuBr3.

Otherwise, EuBr₂ can be prepared, starting from Eu₂O₃ as starting material, dissolved in diluted HBr and evaporated after addition of NH₄Br, wherein EuBr₃, dissociates in EuBr₂ and Br₂ as has been described in Mh. Chem., Bd 97, p.863-865.

More useful information about phase equilibria, vaporization behaviour and thermodynamic properties of europium tribromide was found in J. Chem. Thermodynamics, Vol. 5 (1973), p.283-290, wherein it has unambiguously been illustrated that a reversible equilibrium exists between tetragonally crystallised Eu-dibromide, orthorhombically crystallised dark-rustbrown Eu-tribromide and bromine and wherein a disproportionation process from Eu-tribromide to Eu-dibromide and bromine is highly temperature dependent. So it has been shown that the said disproportionation process starts from a temperature of 200°C on and that an equilibrium between the more hygroscopic Eu-tribromide and the less hygroscopic Eu-dibromide can only be attained after a further calcination as the reaction is distinctly endothermic. As a result condensed phases having a varying composition are measured up, to a EuBr_{2.20} composition.

In US-A 2003/00424429 it is preferred that the europium compound used in tablet form by compressing was first treated by a reduction procedure of trivalent europium, isolation and degassing, before compressing. Besides CsBr as a main component (in an amount of at least 90 mol%) the tablets contain that europium compound in an amount of at most 10 %.

Before starting said compression it is required to heat the powder mixture in a nitrogen atmosphere and to fire it for 2 hours at 525°C, wherein the fired powder should be dehydrated and degassed at 200°C in an evacuated chamber in order to remove moisture as much as possible. After compression of the powders to tablets (requiring a high force of 800 kg/cm²), an evaporation process of the tablet was performed by application of an electron beam.

Besides problems related with hygroscopy, corrosion, purity of the starting materials is not unambiguously provided as many undefined oxides may be present in differing ratio amounts and as moreover presence in crucibles of differing undefined "phases" may give rise to sputtering or bumping while vaporising the starting materials so that an unstable vapour flow and a non-uniform deposition may occur.

### OBJECTS AND SUMMARY OF THE INVENTION

Therefore it is an object of the present invention to offer a method, and more particularly a synthesis procedure, for the manufacturing of CsBr:Eu as a powder phosphor or as a vapour deposited CsBr:Eu phosphor in a layer, wherein said CsBr:Eu phosphor has an excellent and reproducible quality.

More particularly it is an object to provide an efficient method to prepare a CsBr:Eu phosphor in powder form or in needle-shaped layer form, wherein said phosphor contains negligibly small amounts of oxygen contaminant in the phosphor crystal lattice.

Said "efficient method" should be understood as "requiring no special precautions in order to avoid water take-up by the raw mix of starting materials" and "requiring no time consuming drying step during phosphor synthesis", in that, within a temperature range between the melting point of the eutectic composition of CsBr and EuBrₙ and the melting point of the said component to which the crucible is heated, the vapour phase can be held more constant.

The above mentioned object has been realised by making use as a dopant material in the synthesis of CsBr:Eu of a compound having the general formula CsₓEu_{y}X'_{x+αy} or, wherein X' is a halide selected from the group of Cl, Br and I, wherein α ≥ 2 and wherein x/y exceeds a value of 0.25.

Specific features for preferred embodiments of the invention are set out in the dependent claims.

Further advantages and embodiments of the present invention will become apparent from the following description.

### DETAILED DESCRIPTION OF THE INVENTION

In the present invention a more convenient, less moisture-sensitive method has been found, in that an evaporation process has been developed, starting, in one or more containers or crucibles from a compound or a combination of compounds having as a composition CsₓEu_{y}X'_{x+αy}, wherein x/y > 0.25, wherein α ≥ 2 and wherein X' is a halide selected from the group consisting of Cl, Br and I and combinations thereof. As described in Rare Metals, Vol. 21 (1), March 2002, p. 36-42, molten salt phase diagram evaluation by pattern recognition has lead to predict, without experimental proof, of the existence of intermediate compounds as, e.g. CsEu₃Br₇ (wherein CsBr is present in an amount of less than 50%), perovskite like CsEuBr₃ (wherein CsBr is present in an equivalent amount as EuBr₂!), and Cs₃EuBr₅ (wherein CsBr is present in an amount of more than 50%), and wherein, in all of the intermediate compounds, divalent europium is present as an activator element or dopant.

Experimental evidence for the presence of those intermediates has been derived from XRD-analysis of the salts obtained, as XRD-signals appear, differing from the well-known signals as CsBr, EuOBr, EuBr₃, EuBr₂, Eu₃O₄Br and Eu₂O₃.

Opposite to the requirement to first isolate and dry a trivalent europium derivative, to reduce the dried trivalent product in order to get europium in its divalent form, and to take a lot of precaution in order to homogenise the europium salt (present in an amount of less than 10 mol%) with the CsBr salt (present in an amount of more than 90 mol%), the activator or dopant is present as a stabilised divalent europium, embedded in a stable complex ternary intermediate salt wherein the formation of such a complex and the formation of bromine (Br₂) shifts the equilibrium towards the presence of divalent europium as a dopant or activator ion. The term "stable" not only reflects herein presence as oxidation-resistant divalent europium against air oxygen and other oxidants, but also resistance to moisture and absence of any halide like ammonium bromide or HBr gas.

As particularly stable complexes CsₓEu_{y}X'_{x+αy} allow homogeneous melts whether or not mixed together with CsBr and put in a crucible for evaporation purposes: up to 600°C a partial melt is observed yet. The first melting point observed is in the range of the eutectic composition. A higher temperature is thus required to integrally melt the stable complexes, mixtures thereof or mixtures with CsBr and once melting starts, it is clear that a melt is formed in a homogeneous way, without formation of differing phases, and without occurrence of sputtering or bumping. It is clear furtheron that this robust system as in the present invention shows advantages for an evaporation system making use of one as well of as two "boats" or "crucibles" as no differing, non-compatible phases of components are present anymore.

Experimental evidence has further been found for the purity of the stable complex ternary intermediate precursor salts by thermographic analysis. Moreover embedding CsBr together with EuBr₂ in a matrix, clearly reduces its hygroscopic properties.

Advantages related with the present invention, as will be explained hereinafter, are clearly related with stabilisation of compounds, essential in the preparation method of the desired CsBr:Eu phosphor, in that solid particles, when treated at temperatures exceeding the temperature of the eutectic composition are retained in a buffered state, not only for the desired CsₓEu_{y}X'_{x+αy} precursor compounds, but even for a mixture of a main salt as CsBr and the said CsₓEu_{y}X'_{x+αy} precursor compounds. A valid interpretation of the phenomena observed is clearly related with presence of solid core particles, acting as nuclei controlling evaporation within evaporation temperatures in the range from 585 to 675°C and even up to 700°C. Interpretation of signals in XRD spectra most probably indicates perovskite like CsEuBr₃ besides Cs₂EuBr₄ as divalent europium precursors in the case wherein X' is Br as most desired halide.

The mentioned "buffered state" thus guarantees a constant composition of the vapour deposited CsBr:Eu.

According to the method of the present invention, producing a CsX:Eu stimulable phosphor, wherein X represents a halide selected from the group consisting of Br, Cl and combinations thereof, proceeds by following steps:
- adding to one or more crucibles (containers) a compound or a combination of compounds having as a composition CsₓEu_{y}X'_{x+αy}, wherein x/y > 0.25, wherein α ≥ 2 and wherein X' is a halide selected from the group consisting of Cl, Br and I and combinations thereof;
- heating said compound or combination of compounds at a temperature above 450°C,
- cooling said mixture, and
- optionally, recovering said CsX:Eu phosphor.

In a more preferred embodiment according to the method of the present invention, a ratio x/y = 1; more preferably x/y > 1; still more preferably a ratio x/y = 3 and even most preferably x/y > 3.

Moreover said method optionally comprises (as an additional step) a step of annealing at a temperature T in the range between 25°C and 400°C in an inert atmosphere, in air or in an oxygen atmosphere.

According to the method of the present invention as set forth hereinbefore, between 10⁻³ mol % and 400 mol % of Europium is present with respect to Cesium.

In a further preferrd embodiment of the method of the present invention said CsₓEu_{y}X'_{x+αy} compound is one of CsEu₄Br₉, CsEu₂Br₅, CsEuBr₃ and Cs₃EuBr₅.

In a further embodiment of the present invention as said forth hereinbefore CsBr salt is added to one or more crucibles in order to provide said one or more crucibles with a raw mix wherein between 10⁻³ and 400 mol % of Europium is present with respect to the total Cesium amount. In a more preferred embodiment an amount of Europium in the raw mix is in the range between 10⁻³ and 25 mol % with respect to the total Cesium amount present, as e.g. in the range of 10 to 12 mol %. "Raw mix" should be understood as "mixture of salts containing Eu-precursor and CsBr salt, wherein the said CsBr salt has been added in order to obtain that raw mix".

Further according to the method of the present invention, the raw mix is added to only one crucible, in order to provide said one crucible with a raw mix between 10⁻³ and 33 mol % of Europium is present with respect to the total Cesium amount. More preferably a raw mix wherein between 10⁻³ and 10 mol %, and even most preferably a raw mix wherein between 10⁻³ and 3 mol % of Europium is present with respect to the total Cesium amount is provided.

In a particular embodiment according to the method of the present invention, in one crucible only pure CsBr salt is present. Furtheron according to the method of the present invention in at least another crucible CsEuBr₃ is present. According to the method of the present invention in at least another crucible CsBr salt is added in order to provide a raw mix, wherein between 10⁻³ and 400 mol % of Europium is present with respect to the total Cesium amount in said another crucible.

According to the present invention a method is moreover provided for producing a binderless phosphor screen or panel by the steps of providing a CsX:Eu phosphor prepared according to one of the methods according to the present invention given hereinbefore, depositing said phosphor on a substrate after recovering, followed by melting and cooling. In a preferred embodiment thereof, according to the present invention, before depositing said phosphor a milling or grinding step is included, followed by depositing said phosphor on a substrate, melting said mixture up to a temperature T, from Tₘₑₗₜ-100°C to Tₘₑₗₜ+100°C, wherein melting temperature Tₘₑₗₜ represents the melting temperature of the desired phosphor.

In another embodiment according to the present invention a method is further offered for producing a binderless phosphor screen or panel comprising the steps of providing a CsX:Eu phosphor prepared according to one of the methods disclosed hereinbefore, and depositing said phosphor on a substrate by a method selected from the group consisting of physical vapour deposition, chemical vapour deposition and an atomisation technique.

In a preferred embodiment according to the present invention a method is offered for producing a binderless phosphor screen or panel comprising a substrate and a CsX:Eu stimulable phosphor,
wherein X represents a halide selected from the group consisting of Br, Cl and combinations thereof, wherein said method comprises the steps of:
- bringing in a deposition chamber, evacuated to 1 mbar or less and further adding an inert gas thereto, together with said substrate, one or more heatable containers (crucibles) containing a compound or a combination of compounds having as a composition CsₓEu_{y}X'_{x+αy}, wherein x/y > 0.25, wherein α ≥ 2 and wherein X' is a halide selected from the group consisting of Cl, Br and I and combinations thereof,
- further depositing on said substrate, by a method selected from the group consisting of physical vapour deposition, chemical vapour deposition and an atomisation technique, said CsX:Eu stimulable phosphor,
wherein said compound or a combination of compounds having as a composition CsₓEu_{y}X'_{x+3y} or CsₓEu_{y}X'_{x+2y} is (are) present in such a ratio to Cs that on said substrate a CsX:Eu storage phosphor is formed, wherein Eu is present as a dopant in an amount between 10⁻⁵ and 5 mol %.

In a preferred embodiment according to the present invention, said compound or a combination of compounds having as a composition CsₓEu_{y}X'_{x+3y} or CsₓEu_{y}X'_{x+2y} is selected from the group of compounds consisting of CsEu₄Br₉, CsEu₂Br₅, CsEuBr₃ and Cs₃EuBr₅.

According to the present invention a binderless phosphor screen thus contains a CsX:Eu phosphor, wherein said phosphor is advantageously prepared according to the method of the present invention as set forth hereinbefore. In a more preferred embodiment thereof said Cs:X phosphor is a CsBr:Eu phosphor.

According to the present invention said phosphor screen containing a CsX:Eu phosphor, and more preferably a CsBr:Eu phosphor, is thus prepared according to the method of present invention as set forth hereinbefore. In a more preferred embodiment thereof the said binderless phosphor screen is provided with a binderless molten phosphor layer or as a binderless needle-shaped phosphor layer.

Moreoever according to the present invention a method for recording and reproducing images of objects made by high energy radiation is further offered, said method comprising as consecutive steps:
- exposing an image storage panel with X-ray radiation, said panel comprising a binderless phosphor screen prepared according to the method disclosed hereinbefore;
- stimulating said panel with radiation having a wavelength between 500 nm and 1100 nm, thereby releasing stimulated radiation; and
- collecting said stimulated radiation.

### EXAMPLES

While the present invention will hereinafter be described in connection with preferred embodiments thereof, it will be understood that it is not intended to limit the invention to those embodiments.

### 1.Preparation of activator element precursors CsₓEu_{y}Br_{z}:

Differing amounts of EuBr₃ and CsBr were weighed in order to prepare the precursor (EUBLA). After homogenising the mixture demineralised water was added until a clear solution was formed. The solution was added to a ROTAVAP® unit in a glass butt installed in a bath of triethylene glycol, heated up to 100°C under vacuum (less than 50 mbar), until the solution was dried and coloured white to yellow.

Then drying was continued under vacuum during 8 hours at 150°C. The dried product was carefully weighed after cooling and stored in a gloovebox under an inert gas (nitrogen). In the Table 1 hereinafter data have been summarised of the different experiments, giving the number of moles of EuBr₃ and CsBr, ratio of Eu vs. the total amount of Eu+CsBr, the netto weight obtained, the drying time and the number of moles of water, still present in the powdery mixture obtained by the procedure given hereinbefore.

From the Table 1 hereinafter it is concluded that less than 0.1 mole of water, present as "crystal water" is incorporated into the crystals of the crystal mixture thus obtained.

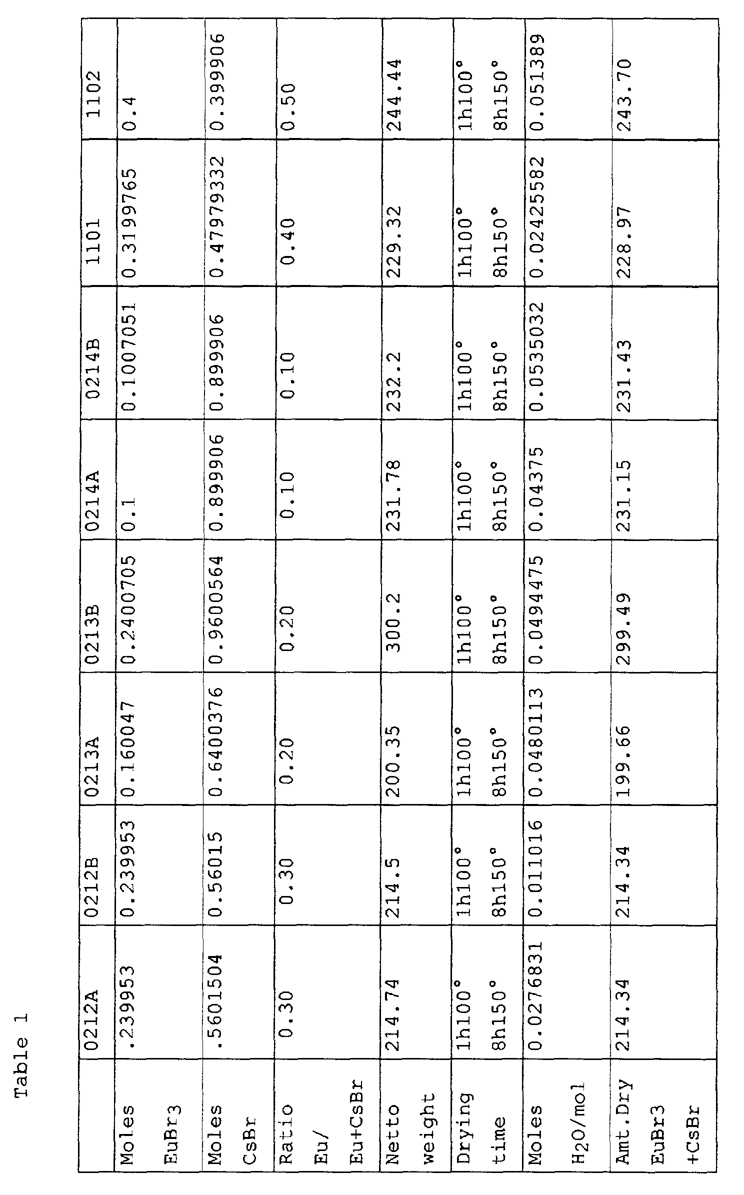

### 2. Firing of activator element precursors CsₓEu_{y}Br_{z}:

In these experiments 50 g of the precursor powder were treated under nitrogen (1.5 l/min.), in an oven, and after 15 min. a firing procedure was started as summarised in the Table 2, wherein the firing conditions have been given, besides numbers of moles of CsBr per mol, of EuBr₃ per mol and of loss of weight, equivalent with loss of bromine for divalent Eu and trivalent Eu.

Table 2 illustrates the results obtained from intermediate compounds in the CsBr/EuBr₂ binary system in differing firing conditions.

**Table 2**

| Firing conditions CsBr/EuBr₂ (30 mol% Eu) | | | | | | |
|---|---|---|---|---|---|---|
| | 0214/01/1 | 0214/02/1 | 0214/03/1 | 0214/04/1 | 0214/05/1 | 0214/07/1 |
| Firing cond. | 24h 150° 3h 200° | 24h 150° 3h 300° | 24h 150° 3h 400° | 24h 150° 3h 500° | 24h 150° 3h 600° | 24h 150° 3h 650° 1h 575° |
| Moles CsBr/mol | 0.7 | 0.7 | 0.7 | 0.7 | 0.7 | 0.7 |
| Moles EuBr₃/ mol | 0.3 | 0.3 | 0.3 | 0.3 | 0.3 | 0.3 |
| Moles CsBr+ EuBr₃ | 0.188 | 0.188 | 0.190 | 0.188 | 0.188 | 0.188 |
| Eq. Loss of Br (EuBr₂) | 0.027 | 0.028 | 0.045 | 0.053 | 0.050 | 0.042 |
| Eq. Loss of Br (EuBr₃) | 0.029 | 0.029 | 0.012 | 0.004 | 0.006 | 0.015 |
| Colour | yellow | dark yellow | very dark yellow | dark yellow | dark yellow | brown |

It is concluded from the weight balance in the Table 2 that the precursor compound obtained by firing indeed is corresponding with the binary CsBr/EuBr₂ system and that the thus provided precursor is CsₓEuBr₂₊ₓ. Analoguous results could be obtained for every ratio of intermediate compounds as obtained hereinbefore for a 70/30 molar ratio (further performed experiments were done for ratios 90/10; 80:20; 60/40 and 50/50. From the Table 2 at higher temperatures of 600°C, there is a loss in evaporating CsBr. The weight reduction obtained is clearly equivalent with loss of bromine in the reduction step wherein EuBr₃ gets reduced to EuBr₂ and wherein Br is lost.

In a summarising Table 3, melting temperatures have been given for compounds obtained after firing of differing ratios of CsBr and EuBr₃ precursor mixtures and % weight reduction between 100°C and 200°C (measured by thermogravimetrical analysis - TGA - and by discontinue scanning calorimetry - DSC).

**Table 3**

| Mol % of CsBr | Mol % of EuBr₃ | Melting temperature Tₘₑₗₜ | Weight reduction % between 100-200°C |
|---|---|---|---|
| 100 | 0 | 640°C | 0 |
| 90 | 10 | 585°C | 0 |
| 80 | 20 | 635°C | 0 |
| 70 | 30 | 675°C | 0 |
| 60 | 40 | | |
| 0 | 100 | 680°C | >22,8* >9,23** |

| | | | |
|---|---|---|---|
| • * % weight reduction for an EuBr₃.6H₂O product | | | |
| • ** % weight reduction for a dried EuBr₃.xH₂O | | | |

It is concluded from the Table 3 that the precursor compositions as obtained after firing are practically not hygroscopic compared with the compounds EuBr₃ and EuBr₂. At low temperatures, no increasing weight has been measured. The CsₓEuBr₂₊ₓ precursor together with CsBr provides melting and evaporation, even better if compared with the system CsBr/EuOBr. Optimised evaporation circumstances should be experimentally determined.

### 3. Characterisation of activator element precursors CsₓEu_{y}Br_{z} by X- ray diffraction (XRD)

From XRD-spectra of CsₓEuBr₂₊ₓ precursor as prepared above, wherein the mixture was fired at 400°C, it is clear that the 2 α-peaks in the diffraction spectrum of the fired CsₓEuBr₂₊ₓ precursor unambiguously indicates that peaks as registrated are similar with those known from of CsSmBr₃ and that only extra peaks are found that should correspond with CsBr and with EuOBr impurities. Furtheron it has unambiguously been shown moreover that peaks of EuBr₂, EuBr₃, Eu₃O₄Br and Eu₂O₃ do not appear, which is a further proof for the unambiguously demonstrated presence of the CsₓEuBr₂₊ₓ precursor.

Having described in detail preferred embodiments of the current invention, it will now be apparent to those skilled in the art that numerous modifications can be made therein without departing from the scope of the invention as defined in the appending claims.

## Claims

1. A method for producing a CsX:Eu stimulable phosphor, wherein X represents a halide selected from the group consisting of Br, Cl and combinations thereof, comprising the steps of
- adding to one or more crucibles a compound or a combination of compounds having as a composition CsₓEu_{y}X'_{x+αy}, wherein x/y > 0.25, wherein α ≥ 2 and wherein X' is a halide selected from the group consisting of Cl, Br and I and combinations thereof;
- heating said compound or combination of compounds at a temperature above 450 °C,
- cooling said mixture, and
- optionally, recovering said CsX:Eu phosphor.

2. Method according to claim 1, wherein x/y = 1.

3. Method according to claim 1, wherein x/y > 1.

4. Method according to claim 1, wherein x/y = 3.

5. Method according to claim 1, wherein x/y > 3.

6. Method according to claim 1, wherein moreover said method comprises a step of annealing at a temperature T in the range between 25°C and 400°C in an inert atmosphere, in air or in an oxygen atmosphere.

7. Method according to any one of the claims 1 to 6, wherein between 10⁻³ mol % and 400 mol % of Europium is present with respect to Cesium.

8. Method according to any one of the claims 1 to 7, wherein said CsₓEu_{y}X'_{x+αy} compound is one of CsEu₄Br₉, CsEu₂Br₅, CsEuBr₃ and Cs₃EuBr₅.

9. Method according to any one of the claims 1 to 8, wherein CsBr salt is added to one or more crucibles in order to provide said one or more crucibles with a raw mix wherein between 10⁻³ and 400 mol % of Europium is present with respect to the total Cesium amount.

10. Method according to any one of the claims 1 to 8, wherein CsBr salt is added to one crucible in order to provide said one crucible with a raw mix wherein between 10⁻³ and 33 mol % of Europium is present with respect to the total Cesium amount.

11. Method according to any one of the claims 1 to 8, wherein CsBr salt is added to one crucible in order to provide said one crucible with a raw mix wherein between 10⁻³ and 10 mol % of Europium is present with respect to the total Cesium amount.

12. Method according to any one of the claims 1 to 8, wherein CsBr salt is added to one crucible and wherein in the said raw mix between 10⁻³ and 3 mol % of Europium is present with respect to the total Cesium amount.

13. Method according to any one of the claims 1 to 8, wherein in one crucible pure CsBr salt is present.

14. Method according to claim 13, wherein in at least another crucible CsEuBr₃ is present.

15. Method according to claim 13, wherein in at least another crucible CsBr salt is added in order to provide said another crucible with a raw mix wherein between 10⁻³ and 400 mol % of Europium is present with respect to the total Cesium amount in said another crucible.

16. A method for producing a binderless phosphor screen or panel by the steps of providing a CsX:Eu phosphor prepared according to the method according to any one of the claims 1 to 15, depositing said phosphor on a substrate after recovering, followed by melting and cooling.

17. A method for producing a binderless phosphor screen or panel according to claim 16, wherein before depositing said phosphor a milling or grinding step is included, followed by depositing said phosphor on a substrate, melting said mixture up to a temperature T, from Tₘₑₗₜ-100°C to Tₘₑₗₜ+100°C, wherein melting temperature Tₘₑₗₜ represents the melting temperature of the desired phosphor.

18. A method for producing a binderless phosphor screen or panel comprising the steps of providing a CsX:Eu phosphor prepared according to the method according to any one of the claims 1 to 15, and depositing said phosphor on a substrate by a method selected from the group consisting of physical vapour deposition, chemical vapour deposition and an atomisation technique.

19. A method for producing a binderless phosphor screen or panel comprising a substrate and a CsX:Eu stimulable phosphor, wherein X represents a halide selected from the group consisting of Br, Cl and combinations thereof, said method comprising the steps of:
- bringing in a deposition chamber, evacuated to 1 mbar or less and further adding an inert gas thereto, together with said substrate, one or more heatable containers (crucibles) containing a compound or a combination of compounds having as a composition CsₓEu_{y}X'_{x+αy}, wherein x/y > 0.25, wherein α ≥ 2 and wherein X' is a halide selected from the group consisting of Cl, Br and I and combinations thereof
- further depositing on said substrate, by a method selected from the group consisting of physical vapour deposition, chemical vapour deposition and an atomisation technique, said CsX:Eu stimulable phosphor,
wherein said compound or a combination of compounds having as a composition CsₓEu_{y}X'_{x+3y} or CsₓEu_{y}X'_{x+2y} is (are) present in such a ratio to Cs that on said substrate a CsX:Eu storage phosphor is formed, wherein Eu is present as a dopant in an amount between 10⁻⁵ and 5 mol %.

20. A method according to claim 18 or 19, wherein said compound or a combination of compounds having as a composition CsₓEu_{y}X'_{x+3y} or CsₓEu_{y}X'_{x+2y} is selected from the group of compounds consisting of CsEu₄Br₉, CsEu₂Br₅, CsEuBr₃ and Cs₃EuBr₅.

21. A binderless phosphor screen containing a CsX:Eu phosphor, wherein said phosphor is prepared according to the method of any one of the claims 1 to 15.

22. A binderless phosphor screen containing a CsX:Eu phosphor, wherein said screen is prepared according to the method of any one of the claims 16 to 20.

23. Method for recording and reproducing images of objects made by high energy radiation, said method comprising as consecutive steps:
- exposing an image storage panel with X-ray radiation, said panel comprising a binderless phosphor screen prepared according to claim 21 or 22;
- stimulating said panel with radiation having a wavelength between 500 nm and 1100 nm, thereby releasing stimulated radiation; and
- collecting said stimulated radiation.
